# EUROPEAN PATENT SPECIFICATION

(11) **EP 3 371 103 B1**
(45) Date of publication and mention of the grant of the patent: **26.05.2021**
(21) Application number: 16801718.4
(22) Date of filing: 07.11.2016
(51) Int. Cl.: C01F 11/44, C04B 28/02, C04B 40/00, C04B 103/12, C04B 111/00

(54) **SOLID PARTICULATE CALCIUM NITRATE COMPOSITION COMPRISING A SOLID PARTICULATE SILICATE AS AN ANTI-CAKING AGENT**
FESTE TEILCHENFÖRMIGE CALCIUMNITRATZUSAMMENSETZUNG MIT FESTEN TEILCHENFÖRMIGEN SILIKAT ALS ENTKALKUNGSMITTEL
COMPOSITION PARTICULAIRE SOLIDE DE NITRATE DE CALCIUM COMPRENANT UN SILICATE PARTICULAIRE SOLIDE EN TANT QU'AGENT ANTIAGGLUTINANT

(30) Priority: 06.11.2015 NO 20151508
(43) Date of publication of application: 12.09.2018
(73) Proprietor: Yara International ASA, 0277 Oslo (NO)
(72) Inventor: FRANKE, Wolfram, 3917 Porsgrunn (NO); THOMMESEN, Hilde, 3960 Stathelle (NO); CILLUFFO, Giuseppe, 20024 Garbagnate Milanese (MI) (IT); ROMEGIALLI, Gianluca, 15057 Tortona (AL) (IT); TORABZADEGAN, Mehrdad, 3734 Skien (NO)
(74) Representative: De Clercq & Partners
(86) International application number: PCT/EP2016/076803
(87) International publication number: WO 2017/077103

(56) References cited:
- WO-A1-2006/041502
- WO-A1-2015/067588
- FR-A- 962 716
- US-A- 2 730 814

## Description

### Technical field

The invention relates to the technical field of anti-caking agents (also called "free-flow agents") for solid particulate calcium nitrate compositions, having particles with an average particle size of between 0.1 and 1 mm (also called "calcium nitrate powder"). An average particle size means that at least 50% of the particles have that size. An anti-caking agent in general is an additive placed in powdered or granulated materials to prevent the formation of lumps (caking) and for easing packaging, transport, and consumption.

The invention more specifically relates to anti-caking agents preventing lump formation caused by the hygroscopic properties of the above described calcium nitrate powders.

### Background

Calcium nitrate Ca(NO₃)₂ by itself, as well as in a mixture with amounts of other compounds, has been used in the concrete industry as a setting accelerator to accelerate the setting time of cementitious binders, especially in cold weather conditions. The term "cementitious" means having the characteristics of cement. Cement is a building material that is a powder made of a mixture of calcined limestone and clay. Used with water and an aggregate, mortar and concrete can be made out of it.

Calcium nitrate powder is at present however still rarely used because of its hygroscopic nature, causing the calcium nitrate powder to form lumps and starting to set the cementitious binders during storage. Concrete or mortar sets as the cement included therein hydrates. Also calcium nitrate powder with very fine particles, i.e. with an average particle size around 0.1 mm, is a very hygroscopic powder and has a high tendency of caking at 20 °C and 1 bar (=101 325 Pascal) atmospheric pressure (standard conditions).

It is common to use anti-caking agent to prevent lump formation of hygroscopic materials. The main target is to provide an agent that can prevent the water uptake and the coagulation of hydrated crystal structures. Classic anti-caking agents are amongst others talcum powder and calcium carbonate powder. Calcium carbonate powder only shows a positive effect at a replacement level of calcium nitrate of at least 10 weight%, meaning that the intended content of active material of about 99 weight% calcium nitrate (in case of anhydrous calcium nitrate) cannot be reached by far. Talcum powder, which is hydrated magnesium silicate, is not a favorable material to use as an anti-caking agent for calcium nitrate, as magnesium is an unwanted compound in concrete admixtures.

Several prior art documents already describe the search for solutions to deal with the hygroscopicity of calcium nitrate.

In EP 0255665 for instance, a coating for reducing dust formation and hygroscopicity of nitrate-containing fertilizers is described. Therein, it is disclosed to apply 0.1 - 0.5 weight% of a coating comprising wax and mineral oil to reduce the hygroscopicity of conditioned nitrate-containing fertilizer, especially calcium nitrate. Such a coating can however not be applied as an anti-caking agent for calcium nitrate powder.

WO 2006/041502 discloses a dry-powder pre-blend cement composition comprising calcium nitrate, silica fume and cement. The dry powder is obtained by not using more than about 5 weight percent of calcium nitrate in the pre-blend cement. The applicant describes that using greater than about 5 weight percent will yield an undesirable mix because of water absorption problems with the calcium nitrate. Therefore, it is critical that the concentration of calcium nitrate in the pre-blend composition is maintained at less than about 5 percent by weight. Silica fume can be added to the cement mixture to achieve high strength and chloride protection for the concrete, this in a preferred percentage from 5-15 percent by weight. This application thus describes a solution of preventing the caking of final pre-blend cement composition, but it does not disclose to provide in an anti-caking agent for calcium nitrate powders to be used in such a pre-blend cement composition, solving the problem of the formation of lumps in calcium nitrate powders because of the hygroscopicity thereof, these lumps preventing an even distribution of calcium nitrate powder in a final pre-blend cementitious mix.

WO 2015/067588 discloses a method for producing dry calcium nitrate compositions.

It is clear that at present, no solution has been found nor suggested to provide in an anti-caking agent for calcium nitrate powders resulting in a "free-flowing" calcium nitrate powder, meaning that the calcium nitrate powder is loose and not sticky at standard conditions. More information on different test methods on flowability that are used to determine whether a powder is "free-flowing" or not is given in example 6 below.

### Summary of the invention

According to a first aspect of the invention, a solid particulate calcium nitrate composition, having particles with an average particle size of between 0.1 and 1 mm, is provided and comprising an anti-caking agent, wherein the anti-caking agent consists of a solid particulate silicate having particles with an average particle size of between 0.05 and 750 µm (also called 'silica powder'); wherein the solid particulate silicate is present in an amount of 0.01 weight% to 2 weight%, based on the weight of the solid particulate calcium nitrate composition and wherein the solid particulate silicate is a solid particulate silicon dioxide.

Solid particulate silicates are typically used as a carrier for catalysts. It is uncommon to use these as an anti-caking agent since they are not soluble in water. Its addition to a product leads to a substantial amount of water-insoluble matter. This excludes solid particulate silicates as anti-caking agent for powdered products that need to be used in a dissolved form later on. Despite of that fact, the applicant surprisingly has discovered that solid particulate silicates having particles with an average particle size of between 0.05 and 750 µm are suitable as an anti-caking agent for a solid particulate calcium nitrate composition having particles with an average particle size of between 0.1 and 1 mm. The presence of such solid particulate silicates in such solid particulate calcium nitrate compositions furthermore has the advantage that the solid particulate silicates do not interfere in the final use of the solid particulate calcium nitrate compositions or intermediate processing steps thereof. In fact, the use of the solid particulate calcium nitrate composition as disclosed herein comprising silicate (or compounds such as silicon dioxide, silica fume or diatomaceous earth) as anticaking agent, does not affect the resulting concrete's strength vis-à-vis a calcium nitrate without silicate as anticaking agent.

This solid particulate calcium nitrate composition is a free-flowing powder at standard conditions, meaning at a temperature of 20 °C and a pressure of 101 325 Pascal. A powder is free-flowing if the particles of the powder do not stick together at a certain pressure and a certain temperature and in a specific piece of equipment. In example 6, two test methods are disclosed in order to determine the flowability of a powder.

In a first possible embodiment of a solid particulate calcium nitrate composition according to the invention, the solid particulate calcium nitrate composition further comprises solid particulate anhydrous calcium nitrate having particles with an average particle size of between 0.1 and 1 mm. The solid particulate anhydrous calcium nitrate preferably consists of around 99 weight% calcium nitrate and around 1 weight% crystal water.

In a second possible embodiment of a solid particulate nitrate composition according to the invention, the solid particulate calcium nitrate composition further comprises a solid particulate potassium calcium nitrate having particles with an average particle size of between 0.1 mm and 1 mm. The solid particulate potassium calcium nitrate composition preferably consists of around 77 weight% calcium nitrate, around 8 weight% potassium nitrate and around 15 weight% crystal water.

In a third possible embodiment of a solid particulate nitrate composition according to the invention, the solid particulate calcium nitrate composition further comprises a solid particulate ammonium calcium nitrate having particles with an average particle size of between 0.1 mm and 1 mm. The solid particulate ammonium calcium nitrate composition preferably consists of around 76 weight% calcium nitrate, around 9 weight% ammonium nitrate and around 15 weight% crystal water.

The advantage of having potassium or ammonium calcium nitrate in the solid particulate calcium nitrate composition is that such compositions can be used in fertilizers. The fertilizer composition can be fine-tuned to the needs of a certain crop or field by varying the amounts of ammonium nitrate and/or potassium nitrate in the composition. Also when a solid particulate calcium nitrate composition is to be used as a fertilizer, the composition needs to be free-flowing to prevent blockage of the machines used to handle the composition and to result in an evenly spreading of the fertilizer over the field.

When using an anti-caking agent having an average particle size of between 0.05 and 750 µm, the anti-caking agent has a sufficiently large surface to volume ratio, making small amounts of anti-caking agent efficiently to keep the solid particulate calcium nitrate free-flowing, meaning free-flowing after being exposed to air with a relative humidity of 77% for 24 hours at 20 °C. Particles smaller than the lower limit of the range are too fine and cause dust upon handling the free-flowing solid particulate composition (powder).

In a preferred embodiment of a solid particulate calcium nitrate composition according to the invention, the solid particulate anhydrous calcium nitrate, the solid particulate potassium calcium nitrate or the solid particulate ammonium calcium nitrate and the solid particulate silicate have the similar average particle size. This prevents segregation of the solid particulate calcium nitrate composition.

The solid particulate silicate is present in an amount of 0.01 weight% to 2.00 weight%, and most preferably 0.1 weight% to 1 weight%, and typically 1 weight% of the weight content of the solid particulate calcium nitrate composition. In other words, 0.01 weight% to 2.00 weight%, and most preferably 0.1 weight% to 1 weight%, and typically 1 weight% of the calcium nitrate composition is replaced by the anti-caking agent.

These amounts of anti-caking agents allow to produce a solid particulate calcium nitrate powder with a very high purity, i.e. of 99.99 weight% to 95.00 weight%, more preferably 99.95 weight% to 98.00 weight% and most preferably 99.90 weight% to 99 weight%, and typically 99.00 weight%, that is and remains free-flowing.

The solid particulate silicate is a solid particulate silicon dioxide.

More advantageous, the solid particulate silicate is an amorphous solid particulate silicon dioxide.

The advantage of the solid particulate silicon dioxide being amorphous is that it can be mixed trough the solid particulate calcium nitrate and the particles of the solid particulate silicon dioxide can be homogeneously spread through the particles of the solid particulate calcium nitrate. When a product with larger particles is used, for example a silica gel, larger amounts of the products need to be used to obtain a similar result as for the amorphous solid particulate silicon dioxide.

Most advantageous, the amorphous solid particulate silicon dioxide consists of a silica fume, a diatomaceous earth or mixtures thereof.

Silica fume, also known as microsilica, (CAS number 69012-64-2, EINECS number 273-761-1) is a (non-crystalline) polymorph of silicon dioxide. It is an ultrafine powder collected as a by-product of the silicon and ferrosilicon alloy production and consists of spherical particles with an average particle diameter of 100 nm to 300 nm and typically 150 nm. The main field of application is as pozzolanic material for high performance concrete.

Diatomaceous earth, also known as D.E., diatomite, or kieselgur / kieselguhr, is a naturally occurring, soft, siliceous sedimentary rock that is easily crumbled into a fine white to off-white powder. It has a particle size ranging from less than 3 µm to more than 1 mm, but typically 10 µm to 200 µm. Depending on the granularity, this powder can have an abrasive feel, similar to pumice powder, and has a low density as a result of its high porosity. The typical chemical composition of oven-dried diatomaceous earth is 80 weight% to 90 weight% silica, with 2 weight% to 4 weight% alumina (attributed mostly to clay minerals) and 0.5 weight% to 2 weight% iron oxide. This type of solid particulate silicon dioxide is made up out of small particles with a large surface to volume ratio. As it is the surface of the anti-caking agent that causes the anti-caking properties, the larger the surface over volume ratio, the better the anti-caking properties. A preferred embodiment of a solid particulate calcium nitrate composition according to the invention has a caking number lower than 20, more preferably lower than 10.

The term "average particle size" as used herein with reference to the calcium nitrate refers to the average particle size by weight. The average is determined by segregation in a sieve shaker using a stack of woven wire mesh sieves having mesh sizes of 2 mm, 1.5 mm, 1 mm, 0.5 mm, 0.1 mm, and 0.05 mm and determining the weight of each segregated fraction and calculating the average size.

The term "average particle size" as used herein with reference to the anti-caking agent refers to the average particle size by weight. The average for agents with particles in the larger range 10 - 750 µm can be determined by sieve analysis using sieves with mesh openings of 45 µm, 63 µm, 90 µm, and 250 µm and determining the weight of each fraction and calculating the average size. For anti-caking agents with particle sizes in the lower part of the range i.e. 0.05 - 45 µm the average particle size by weight can be determined by laser diffraction with Mie analysis.

The term "similar average particle size" refers to a difference in average particle size by weight of not more than 0.1 mm.

The term "caking number" refers to a number characterizing the effort needed to disintegrate a lump / cake. The number is the average amount of force expressed in pounds applied uniformly on top of a lump / cake (by means of a 3.5 cm diameter flat disk), needed to disintegrate / break the lump / cake.

Low caking numbers indicate a low tendency for the powder to aggregate. A person skilled in the art knows that powders with a caking numbers below 20 are free-flowing powders.

According to a second aspect of the invention, a pre-blend binder composition is provided comprising a hydraulic binder and 0.5 weight% to 5 weight% solid particulate calcium nitrate composition according to the invention as described in the paragraphs above.

A hydraulic binder is a material which sets and hardens by hydration. The term "pre-blend binder composition" refers to a composition comprising a hydraulic binder and additives influencing the functioning of the hydraulic binder, for example in its function as a setting accelerator.

The hydraulic binder preferably is cement, lime or a mixture thereof. In a cementitious pre-blend binder composition, the hydraulic binder at least comprises cement, more preferably a hydraulic cement, even more preferably Portland cement, most preferably Portland blast furnace cement, Portland fly ash cement, Portland pozzolan cement or Portland silica fume cement.

Calcium nitrate in general accelerates the setting time of hydraulic binders, typically cement, but due to its hygroscopic nature and therefor its caking tendencies, it is almost impossible to obtain a homogeneous blend of the binder with the calcium nitrate. When these are mixed, lumps of calcium nitrate will form, having as a result that the mortar or concrete mixture will not form cementitious properties on setting and therefor will form weak spots when it is set. The invention however solves these lump / caking tendencies by adding a solid particulate silicate as anti-caking agent that does not negatively interfere with the functioning of the hydraulic binder. Therefore, a homogeneous pre-blend binder composition can be achieved.

Even more, the addition of a solid particulate silicate to a pre-blend binder composition results in a material that upon setting has an increased compressive strength and a reduced porosity.

According to a third aspect of the invention, a dry mortar mixture or a tile adhesive is provided at least comprising
- a fine aggregate, preferably sand, and
- a pre-blend binder composition according to the invention as described above. The term "dry mortar mixture" (or dry mortar blend) is a technical term and refers to a mixture of all the above mentioned ingredients, with the exception of water that is added to the dry mortar mixture just before it is used, resulting in a wet mortar paste. A wet mortar paste is commonly used as a construction material to bind construction blocks together and fill the gaps between them. A wet mortar paste hardens when it sets, resulting in a rigid aggregate structure. Mortar can also be used to fix, or point, masonry when the original mortar has washed away. The dry mortar mixture is preferably stored dry in bags. In a dry cementitious mortar mixture, the binder is cement.

A dry mortar mixture according to the invention typically consists of about 25 weight% of cement, of about 74 weight % of sand and of about 0.25 weight% to 1 weight% of a solid particulate calcium nitrate composition.

The term "tile adhesive composition" is a technical term and refers to a mixture of all the above mentioned ingredients, with the exception of water that is added to the tile adhesive just before it is used, resulting in a wet tile adhesive paste. A tile adhesive paste is commonly used as a construction material to glue tiles to a wall or a floor. A wet tile adhesive paste hardens when it sets, resulting in a rigid aggregate structure. A tile adhesive composition according to the invention typically consists of about 30 weight% of cement, about 55 weight% of sand, about 10 weight% fibres, about 0,25 weight% to 1 weight % of a solid particulate calcium nitrate composition and the rest are other chemicals to modify fresh and long term properties.

According to a fourth aspect of the invention, a dry concrete mixture is provided at least comprising
- a coarse aggregate consisting of stones and/or gravel, and a fine aggregate, preferably sand;
- a pre-blend binder composition according to the invention as described above. Depending on the required properties of the set concrete, the coarse aggregate can consist of coarse gravel or stones such as amongst others crushed rocks such as limestone or granite.

The term "dry concrete mixture" (or dry concrete blend) is a technical term and refers to a mixture of all the above mentioned ingredients, with the exception of water that is added to the dry concrete mixture just before it is used, resulting in "instant concrete". This instant concrete is able to be shaped (typically poured or casted) and then solidifies and hardens (also called cures or sets) into rock-hard strength concrete through a chemical process called hydration. The water reacts with the cement, which bonds the other components together, finally creating an aggregate structure in the form of a robust stone-like material. Concrete is commonly used as a construction material.

Often reinforcements are included to achieve the desired physical properties of the construction material. The dry concrete mixture is preferably stored dry in bags.

A dry concrete mixture according to the invention typically consists of about 14 weight % of cement, of about 85 weight % of fine aggregate and coarse aggregate and of about 0.1 - 0.7 weight % of solid particulate calcium nitrate composition.

Since in this dry mortar or concrete mixture, a pre-blend binder composition is used that is free from calcium nitrate lumps, also the dry mortar or concrete mixture will be free of calcium nitrate lumps. This means that upon setting, no weak spots are formed that occur due to the presence of calcium nitrate lumps.

Furthermore, the set mortar or set concrete will due to the presence of silicon dioxide have an increased strength and a reduced porosity.

In a fifth aspect according to the invention, a method for producing a solid particulate calcium nitrate composition according to the invention as described above is obtained, the method comprising the step of:
- providing a freshly produced and cooled anhydrous solid particulate calcium nitrate, solid particulate potassium calcium nitrate or solid particulate ammonium calcium nitrate, having particles with an average particle size of between 0.1 mm and 1 mm, wherein the amount of free water in the freshly produced and cooled anhydrous solid particulate calcium nitrate, solid particulate potassium calcium nitrate or solid particulate ammonium calcium nitrate is less than 1 weight%; and
- adding to the freshly produced and cooled anhydrous solid particulate calcium nitrate, solid particulate potassium calcium nitrate or solid particulate ammonium calcium nitrate, a solid particulate silicate having particles with an average particle size of between 0.05 µm and 750 µm in an amount of 0.01 weight% to 2.00 weight% of the weight content of the solid particulate calcium nitrate composition as anti-caking agent for the anhydrous solid particulate calcium nitrate, solid particulate potassium calcium nitrate or solid particulate ammonium calcium nitrate.

According to a particular embodiment, the method for producing a solid particulate calcium nitrate composition as disclosed herein, comprises the steps of:
- providing a freshly produced and cooled anhydrous solid particulate calcium nitrate, solid particulate potassium calcium nitrate or solid particulate ammonium calcium nitrate, having particles with an average particle size of between 0.1 mm and 1 mm; and
- adding to the freshly produced and cooled anhydrous solid particulate calcium nitrate, solid particulate potassium calcium nitrate or solid particulate ammonium calcium nitrate, a solid particulate silicate having particles with an average particle size of between 0.05 µm and 750 µm in an amount of 0.01 weight% to 2.00 weight% of the weight content of the solid particulate calcium nitrate composition as anti-caking agent for the anhydrous solid particulate calcium nitrate, solid particulate potassium calcium nitrate or solid particulate ammonium calcium nitrate.

The term "freshly produced and cooled anhydrous solid particulate calcium nitrate, solid particulate potassium calcium nitrate or solid particulate ammonium calcium nitrate" refers to solid particulate calcium nitrate, solid particulate potassium calcium nitrate or solid particulate ammonium calcium nitrate that has the same water content as the moment the solid particulate calcium nitrate, solid particulate potassium calcium nitrate or solid particulate ammonium calcium nitrate leaves the production process as an end product. The solid particulate calcium nitrate, solid particulate potassium calcium nitrate or solid particulate ammonium calcium nitrate was not in contact with humid air. The amount of free water in the solid particulate calcium nitrate, solid particulate potassium calcium nitrate or solid particulate ammonium calcium nitrate is less than 1 weight%. Free water is water that is not crystal water or water that is not contained in the crystal lattice of the solid particulate calcium nitrate, solid particulate potassium calcium nitrate or solid particulate ammonium calcium nitrate.

This method has the advantage that the anti-caking agent is added before the solid particulate calcium nitrate, solid particulate potassium calcium nitrate or solid particulate ammonium calcium nitrate has been able to absorb water due to its hygroscopic nature. Once water is absorbed by the solid particulate calcium nitrate, solid particulate potassium calcium nitrate or solid particulate ammonium calcium nitrate, lumps start to form. Adding solid particulate silicate to solid particulate calcium nitrate, solid particulate potassium calcium nitrate or solid particulate ammonium calcium nitrate with lumps already in it will not break down the already existing lumps. The solid particulate silicate will only prevent the formation of new lumps.

In a first possible embodiment of a method according to the invention, the solid particulate calcium nitrate composition further comprises a solid particulate anhydrous calcium nitrate and having particles with an average particle size of between 0.1 mm and 1 mm.

In another possible embodiment of a method according to the invention, the solid particulate calcium nitrate composition further comprises a solid particulate potassium calcium nitrate and having particles with an average particle size of between 0.1 mm and 1 mm.

In still another possible embodiment of a method according to the invention, the solid particulate calcium nitrate composition further comprises solid particulate ammonium calcium nitrate and having particles with an average particle size of between 0.1 and 1 mm.

The solid particulate anhydrous calcium nitrate, the solid particulate potassium calcium nitrate or the solid particulate ammonium calcium nitrate and the solid particulate silicate preferably have a similar average particle size.

In an advantageous method according to the invention, the solid particulate silicate is present in an amount of 0.05 to 2 weight%, and most preferably in an amount of 0.1 to 1 weight% of the weight content of the solid particulate calcium nitrate composition.

In a preferred embodiment of a method according to the invention, the solid particulate silicate is an amorphous solid particulate silicon dioxide.

In a most preferred embodiment according to the invention, the amorphous solid particulate silicon dioxide consists of a silica fume, a diatomaceous earth or mixtures thereof.

Preferably, the composition has a caking number below 20.

In a sixth aspect according to the invention, the use of a solid particulate silicate having particles with an average particle size of between 0.05 µm and 750 µm as anti-caking agent for a solid particulate calcium nitrate composition having particles with an average particle size of between 0.1 mm and 1 mm is disclosed.

Solid particulate silicate has the advantage that relative small amounts are effective to keep a solid particulate calcium nitrate composition free-flowing. Amounts in the range of 0.01 weight% to 5.00 weight%, more preferably 0.05 weight% to 2.00 weight%, and most preferably 0.1 weight% to 1 weight%, are sufficient to keep a solid particulate calcium nitrate composition free-flowing.

Furthermore, the use of solid particulate silicate as an anti-caking agent allows to use free-flowing solid particulate calcium nitrate compositions in applications wherein other anti-caking agents are causing unwanted side reactions, for example the magnesium ions in the anti-caking agent talcum that causes weak spots in concrete as the magnesium ions forms brucite, which is not cementitious.

In a seventh aspect according to the invention, the use of a solid particulate calcium nitrate composition according to the invention as a setting accelerator for a cementitious binder is disclosed.

The advantage thereof is that the setting accelerator is lump free and therefor can be mixed through the cementitious binder obtaining a homogeneous mixture. If there were lumps in the setting accelerator, these lumps would also be present in the cementitious binder and consequently also in the mortar or the concrete made with such cementitious binder. Lumps don't have any cementitious properties and therefor cause weak spots in the mortar or the concrete. A setting accelerator based on a free-flowing solid particulate calcium nitrate composition according to the invention prevents this problem. In a preferred embodiment, the cementitious binder is used in a dry mortar mixture, a dry concrete mixture or a tile adhesive composition.

This results in a dry mortar mixture, a dry concrete mixture, or a tile adhesive composition with an accelerated setting time but without the weak spots that are formed during the setting of product because of lumps that are otherwise formed by the cementitious binder without solid particulate silicate as anti-caking agent.

### Description of the figures

- Figure 1 shows a graphical representation of the weight measurements (related to the water uptake) of the different samples as stored in closed containers after 1 day, 1 week and 1 month;
- Figure 2 shows a graphical representation of the weight measurements (related to the water uptake) of the same samples of figure 1 as stored in open containers after 1 day, 1 week and 1 month;
- Figure 3 shows a diagram of the test results of NitCal 99 according to the second flowability test method using the aero-flow powder flowability analyzer;
- Figure 4 shows a diagram of the test results of NitCal 99+ 1 weight% Damolin DA 100G according to the second flowability test method using the aero-flow powder flowability analyzer.

### Detailed description of the invention

The present invention relates to a solid particulate calcium nitrate composition having particles with an average particle size of between 0.1 mm and 1 mm, this composition comprising a solid particulate silicate with an average particle size of between 0.05 µm and 750 µm; wherein the solid particulate silicate is present in an amount of 0.01 weight% to 2 weight%, based on the weight of the solid particulate calcium nitrate composition and wherein the solid particulate silicate is a solid particulate silicon dioxide. It has been shown that the solid particulate silicate is effective in keeping a solid particulate calcium nitrate composition with the specific average particle size (further called in the description "calcium nitrate powder"), a free-flowing powder, even after exposure to air with a 77% relative humidity for 24 hours at 20 °C, in a range of preferably 0.01 weight% to 2.00 weight%, more preferably 0.05 weight% to 2.00 weight%, and most preferably 0.1 weight% to 1 weight% of the weight content of the solid particulate calcium nitrate composition.

Calcium nitrate is an inorganic compound with the formula Ca(NO₃)₂. This colourless salt absorbs moisture from the air and is commonly found as a tetrahydrate. It is mainly used as a component in fertilizers. Known related salts are ammonium pentacalcium nitrate decahydrate and potassium pentacalcium nitrate decahydrate. Different calcium nitrate salts are available from Yara International ASA (Oslo, Norway) under the trademark NitCal (solids with a concentration of about 76 and 78 weight% of calcium nitrate and solutions of about 45 and 50 weight%).

The solid particulate calcium nitrate composition can next to the solid particulate silicate with particles having the specific particle size, also comprise a number of different related calcium nitrate salts, i.e.
- a solid particulate anhydrous calcium nitrate;
- a solid particulate potassium calcium nitrate; or
- a solid particulate ammonium calcium nitrate;
all having particles with an average particle size of between 0.1 and 1 mm.

The solid particulate potassium calcium nitrate and the solid particulate ammonium calcium nitrate are preferably double salts of calcium nitrate with potassium or ammonium. A double salt is a salt containing more than one cation or anion, and is obtained by a combination of two different salts which were crystallized in the same regular ionic lattice. Such compositions are of special interest in the fertilizer industry. It is remarked that the term "ammonium calcium nitrate" refers to ammonium pentacalcium nitrate decahydrate (CAS-No.: 15245-12-2; EC-No. : 239-289-5). This shall not be confused with "calcium ammonium nitrate" what is the technical term for the blend of limestone and ammonium nitrate. The term "potassium calcium nitrate" refers to potassium pentacalcium nitrate decahydrate (CAS-No.: 905593-70-6; Product notification: 07-16-0045-00).

The average particle size of the solid particulate silicate as the anti-caking agent is 0.05 to 750 µm, more preferably 0.01 µm to 500 µm, even more preferably 0.10 to 200 µm, still even more preferably 0.15 to 100 µm, most preferably 0.20 to 50 µm, typically from 0.30 to 10 µm and especially from 0.50 to 1 µm.

Most preferably, the solid particulate anhydrous calcium nitrate, the solid particulate potassium calcium nitrate or the solid particulate ammonium calcium nitrate and the solid particulate silicate have a similar average particle size, preferably being around 100 µm.

The average particle size of the particles of the different compositions and powders as mentioned in this patent application are measured by means of particle segregation. In particle segregation, particulate solids tend to segregate by virtue of differences in the size, and also physical properties such as volume, density, shape and other properties of particles of which they are composed. In the present example the particles obtained were segregated in a sieve shaker using a stack of woven wire mesh sieves having mesh sizes of 2 mm, 1.5 mm, 1 mm, 0.5 mm, 0.1 mm and 0.05 mm, respectively. Additional sieves can be used to obtain additional segregation.

The solid particulate silicate that is applied as the anti-caking agent is a solid particulate silicon dioxide, more preferably an amorphous solid particulate silicon dioxide and most preferably a silica fume and diatomaceous earth.

The solid particulate calcium nitrate composition preferably has a caking number of lower than 20 and more preferably lower than 10.

In the method for producing a solid particulate calcium nitrate composition according to the invention as described above, the following steps are included:
- providing a freshly produced and cooled anhydrous solid particulate calcium nitrate, a solid particulate potassium calcium nitrate or a solid particulate ammonium calcium nitrate, having particles with an average particle size of between 0.1 and 1 mm, wherein the amount of free water in the freshly produced and cooled anhydrous solid particulate calcium nitrate, solid particulate potassium calcium nitrate or solid particulate ammonium calcium nitrate is less than 1 weight%;
- adding to the freshly produced and cooled anhydrous solid particulate calcium nitrate, a solid particulate potassium calcium nitrate or a solid particulate ammonium calcium nitrate, a solid particulate silicate having particles with an average particle size of between 0.05 µm and 750 µm in an amount of 0.01 weight% to 2-00 weight% of the weight content of the solid particulate calcium nitrate composition as an anti-caking agent for the anhydrous solid particulate calcium nitrate, a solid particulate potassium calcium nitrate or a solid particulate ammonium calcium nitrate.

This anhydrous solid particulate calcium nitrate, a solid particulate potassium calcium nitrate or a solid particulate ammonium calcium nitrate, all having particles with an average particle size of between 0.1 mm and 1 mm can be produced by means of an industrial turbo-dryer such as a turbo-dryer (also called turbo-concentrator) as described in European patent 0749772 and manufactured by the company VOMM Impianti e Processi, Rozzano (MI). A method for producing an anhydrous powder having
- a calcium nitrate content of between 92 and 99.9 weight %;
- a water content of between 0.1 and 8 weight %; and
- a particle size of between 0.05 and 1.5 mm,
wherein the method comprises the step of subjecting a calcium nitrate solution having a water content of between 70 weight% and 15 weight % of water and a calcium nitrate content of between 30 weight% and 80 weight % to a drying step in an industrial turbo-dryer, resulting in the anhydrous calcium nitrate powder, has been described in the co-pending Norwegian patent application no. 20140795 and the co-pending PCT patent application no. PCT/EP2015/064065.

The mixing of the anti-caking agent with the anhydrous solid particulate calcium nitrate, a solid particulate potassium calcium nitrate or a solid particulate ammonium calcium nitrate to form the final solid particulate calcium nitrate composition is thus done before the anhydrous solid particulate calcium nitrate, the solid particulate potassium calcium nitrate or the solid particulate ammonium calcium nitrate can absorb water from the air, Consequently, the anhydrous solid particulate calcium nitrate, the solid particulate potassium calcium nitrate or the solid particulate ammonium calcium nitrate has the same water content as when it is leaving the production process.

The solid particulate calcium nitrate composition can be mixed with a binder to form a pre-blend binder composition. Therewith, 0.5 weight% to 5 weight % of solid particulate calcium nitrate composition according to the invention as described in the above paragraph will be mixed with the binder. To form a cementitious pre-blend binder, the binder is a cementitious binder such as cement. Preferably, a hydraulic cement, even more preferably Portland cement, most preferably Portland blast furnace cement, Portland fly ash cement, Portland pozzolan cement or Portland silica fume cement are used.

The pre-blend binder composition will be lump-free since a free-flowing solid particulate calcium nitrate composition according to the invention as described above will be incorporated into the pre-blend binder composition, through which upon setting, no weak spots will be formed in the hardened product.

Construction materials such as dry mortar mixtures, tile adhesive compositions and dry concrete mixtures, can be made from a pre-blend binder composition as described above on mixing the pre blend binder composition with aggregates. Depending on the type of construction material, different aggregates are used. To produce for instance a dry mortar mixture, a fine aggregate, preferably sand, is used, while to produce a dry concrete mixture, a mixture of a coarse and a fine aggregate is used, the coarse aggregate preferably consisting of stones and/or gravel, and the fine aggregate preferably being sand. To obtain the construction materials, the pre-blend binder composition according to the invention as described above is mixed with 200 vol% to 900 vol%, preferably 300 vol% to 800 vol%, more preferably 400 vol% to 700 vol% and most preferably 500 vol% to 600 vol% of at least one of the abovementioned aggregates.

The solid particulate calcium nitrate composition will cause a shorter setting time of the construction materials. The initial setting time of the pre-blend binder composition according to the invention as described above and of the construction materials is preferably from 15 minutes to 60 minutes, more preferably 20 minutes to 50 minutes, even more preferably 30 minutes to 40 minutes, and most preferably 35 minutes. The present invention will be now described in more details, referring to examples that are not limitative.

### Examples

### Example 1

Freshly produced and cooled anhydrous calcium nitrate powder (99 weight% calcium nitrate, 1 weight% crystal water, 90 weight % of the particles having a particle size between 0.1 mm-1 mm, 5 weight % larger than 1 mm, 5 weight % smaller than 0.1 mm, determined by sieve analysis) is mixed with 0.05 weight% silica fume (compared to the weight of the anhydrous calcium nitrate powder). The mixture is blended thoroughly. In parallel, a sample without addition of silica fume is used as a reference. The samples are exposed to a standard laboratory air (20°C, 77% relative humidity) over one day (24 hours). It could be visually observed that the powder with silica fume addition remains free-flowing, whereas the powder without silica fume forms lumps.

### Example 2

Freshly produced and cooled anhydrous calcium nitrate powder (99 weight% calcium nitrate, 1 weight% crystal water, 90 weight % of the particles having a particle size between 0.1 mm-1 mm, 5 weight % larger than 1 mm, 5 weight % smaller than 0.1 mm determined by sieve analysis) is mixed with 1.00 weight% silica fume, compared to the weight of the anhydrous calcium nitrate powder. The mixture is blended thoroughly. In parallel, a sample without addition of silica fume is used as a reference. The samples are exposed to a standard laboratory air (20°C, 77% relative humidity) for three days (72 hours). It could be visually observed that the powder with silica fume addition remains free-flowing whereas the powder without silica fume forms lumps.

### Example 3

Freshly produced and cooled potassium calcium nitrate powder (77 weight% calcium nitrate, 8 weight% potassium nitrate, 15 weight % crystal water, 90 weight % of the particles having a particle size between 0.1 mm-1 mm, 5 weight % larger than 1 mm, 5 weight % smaller than 0.1 mm determined by sieve analysis) is mixed with 0.10 weight% of silica fume compared to the weight content of the potassium calcium nitrate powder. The mixture is blended thoroughly. In parallel, a sample without addition of silica fume is used as a reference. The samples are exposed to a standard laboratory air (20°C, 70% relative humidity) over one day (24 hours). It could be visually observed that the powder with silica fume addition remains free-flowing whereas the powder without silica fume forms lumps.

It is remarked that the behavior of ammonium calcium nitrate powder is the same as the behavior of potassium calcium nitrate powder.

### Example 4

Freshly produced and cooled pure anhydrous calcium nitrate powder (99 weight % calcium nitrate, 1 weight % crystal water (90 weight % of the particles having a particle size between 0.1 mm-1 mm, 5 weight % larger than 1 mm, 5 weight % smaller than 0.1 mm determined by sieve analysis) is mixed with 1 weight% diatomaceous earth (0.1 mm average particle size) (compared to the weight of the anhydrous calcium nitrate anhydrous powder). The mixture is blended thoroughly. In parallel, a sample without addition of diatomaceous earth is used as a reference. The samples are exposed to a standard laboratory air (20°C, 77% relative humidity) over one day (24 hours). It could be visually observed that the powder with diatomaceous earth addition remains free-flowing whereas the powder without silica fume forms lumps.

### Example 5

In a lab test, the water take up of a mixture of a pure anhydrous calcium nitrate powder (99 weight % calcium nitrate, 1 weight % crystal water, 90 weight % of the particles having a particle size between 0.1 mm-1 mm, 5 weight % larger than 1 mm, 5 weight % smaller than 0.1 mm determined by sieve analysis) and an anti-caking agent
- according to the state of the art, i.e. talcum powder (that is commonly used as an anti-caking agent in NPK products), more specifically Finntalc M30 - SQ of Mondo Minerals B.V., having a median particle size (50%) of 10 µm, and
- according to the invention, i.e. Damolin DA100G, which is a diatomaceous earth product;
have been compared.

The Damolin DA100G has the following specifications:

| Sieve analysis | Max | Average |
|---|---|---|
| >45 µm | 28 % | 21.7 % |
| >63 µm | 18 % | 14.1 % |
| >90 µm | 12 % | 7.3 % |
| >250 µm | 4 % | 0.2 % |

In the table I below, different samples, consisting of different amounts of pure anhydrous calcium nitrate powder that is mixed with on the one hand talcum powder and on the other hand the diatomaceous earth product, that have been tested are shown. All freshly mixed samples initially weighed 100 g.

**Table I: Different samples consisting of different amounts of pure anhydrous calcium nitrate powder that is mixed with on the one hand talcum powder and on the other hand the diatomaceous earth product**

| Sample | Pure anhydrous CN powder (weight %) | Damolin DA 100G (weight %) | Finntalc M30 - SQ (weight %) |
|---|---|---|---|
| 1 | 98 | 2 | 0 |
| 2 | 99 | 1 | 0 |
| 3 | 99.9 | 0.1 | 0 |
| 4 | 98 | 0 | 2 |
| 5 | 99 | 0 | 1 |
| 6 | 99.9 | 0 | 0.1 |

The lab test consisted of storing the different samples of table I on a lab bench in an open and a closed container. After 1 day, 1 week and 1 month, the samples were weighed (see table II) and evaluated visually. The measurement results are given in table II below.

**Table II: Weight of the samples of table I in an open and closed container after 1day, 1 week and 1 month storage on a lab bench**

| Sample | Weight increase [g] | | | | | |
|---|---|---|---|---|---|---|
| | 1 day | | 1 week | | 1 month | |
| | closed | open | closed | open | closed | open |
| 1 | 0.01 | 0.62 | 0.03 | 3.96 | 0.24 | 16.04 |
| 2 | 0.01 | 0.66 | 0.03 | 2.96 | 0.21 | 15.83 |
| 3 | 0.01 | 0.14 | 0.02 | 3.30 | 0.18 | 15.05 |
| 4 | 0.01 | 0.73 | 0.03 | 3.79 | 0.19 | 15.94 |
| 5 | 0.01 | 0.72 | 0.02 | 3.91 | 0.18 | 16.48 |
| 6 | 0.00 | 0.72 | 0.01 | 3.68 | 0.18 | 16.70 |

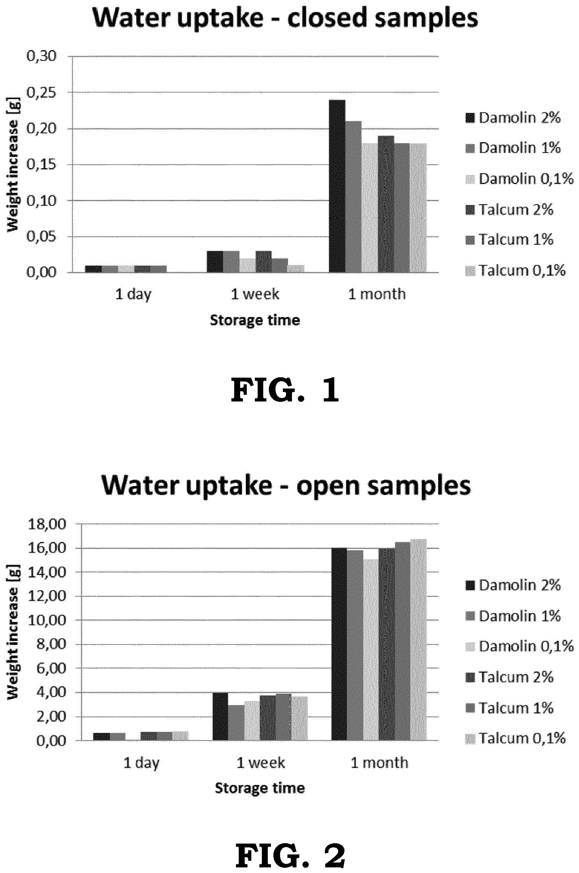

In figure 1, a graphical representation of the weight measurements (related to the water uptake) of the samples 1 - 6 as stored in closed containers is shown, while in figure 2 a graphical representation of the weight measurements (related to the water uptake) of the samples 1 - 6 as stored in open containers is shown.

Out of these weight measurements, it can be concluded that the addition of the Damolin DA100G product leads to a higher or at least a similar water uptake over time compared to the Talcum powder. The differences are minor.

In the table III below, the impact of the talcum powder and the diatomaceous earth product on the lump formation and the caking of the pure anhydrous calcium nitrate powder is shown.

**Table III: Impact of talcum powder and diatomaceous earth product on the on the lump formation and the caking of the pure anhydrous calcium nitrate powder**

| Sample | Lump formation and caking | | | | | |
|---|---|---|---|---|---|---|
| | 1 day | | 1 week | | 1 month | |
| | closed | open | closed | open | closed | open |
| 1 | OK | Layer decreasing | OK | Increased layer | Soft lumps | Caked |
| 2 | | | | | | |
| 3 | | | | Caked | One lump | |
| 4 | | Significant layer | | Caked | | |
| 5 | | | | | | |
| 6 | | | | | | |

Out of table III, it can be concluded that the addition of the diatomaceous earth product to an opened sample does not give protection against lump formation and caking. However, the addition of 1 weight % of the diatomaceous earth product to the pure anhydrous calcium nitrate powder seems to be sufficient to prevent caking up to one month. Also the lump formation is strongly reduced.

### Example 6

Two samples were tested by means of the flowability test methods as described below, i.e;
- NitCal 99, which is calcium nitrate with a purity of 99 weight%;
- NitCal 99 with 1 weight% of Damolin DA 100G.

### Test method 1

The first test method is the flowability test method according to the European Pharmacopoeia method "2.9.16. Flowability". This flowability test is intended to determine the ability of divided solids (for example, powders and granules) to flow vertically under defined conditions. According to the flow properties of the material to be tested, funnels with or without stem, with different angles and orifice diameters are used. The funnel is maintained upright by a suitable device. The assembly must be protected from vibrations.

The method steps for this test are as follows: introduce without compacting into a dry funnel, whose bottom opening has been blocked by suitable means, a test sample weighed with 0.5 per cent accuracy. The amount of the sample depends on the apparent volume and the apparatus used. Unblock the bottom opening of the funnel and measure the time needed for the entire sample to flow out of the funnel. Carry out three of these determinations.

The funnel used here had an opening of 25 mm.

The flowability is expressed in seconds and tenths of seconds, related to 100 g of sample (s/100g). The results depend on the storage conditions of the material to be tested.

### Test method 2

The second test method is determining the flowability using an aero-flow powder flowability analyzer. In this test method, the samples are filled in a cylindrical, see-through drum that rotates slowly around its horizontal axis at a constant speed. When the angle on the surface of the sample becomes too large, the powder will flow towards the bottom of the drum. This can be compared with an avalanche. The instrument records the time interval between the avalanches and the size of the avalanche. Each of the samples was tested for three minutes at three different velocities, i.e. 60s/rotation, 120s/rotation and 180s/rotation.

### Results of the tested samples tested by the test methods 1 and 2

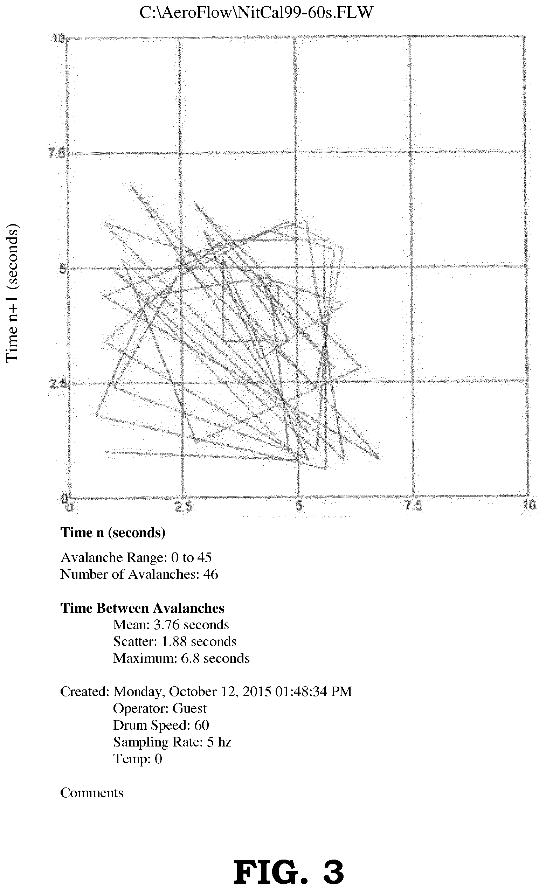

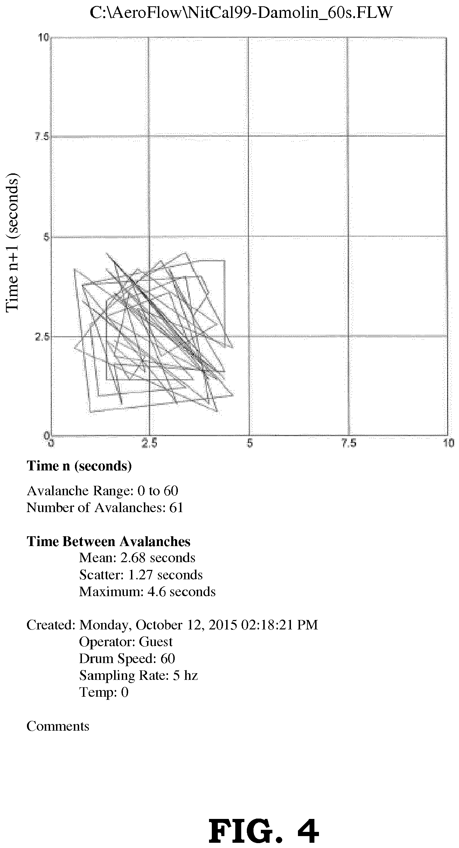

- *Test method 1*: NitCal 99 didn't flow through the funnel at all while NitCal 99 with 1 weight% Damolin DA 100G got a result of 0.4s/100g - 1.0 s/100g.
- *Test method 2*: NitCal 99 + 1 weight% Damolin DA 100G has a higher number of avalanches, hence a shorter time between the avalanches than NitCal99. At 60 seconds per rotation, the mean time between the avalanches is reduced from 3.76 seconds when testing NitCal 99 alone to 2.68 seconds when testing NitCal 99 + 1 weight% Damolin DA 100G. At 120 seconds per rotation, the mean time between the avalanches is reduced from 7.78 seconds when testing NitCal 99 alone to 5.45 seconds when testing NitCal 99+1 weight% Damolin DA 100G. At 180 seconds per rotation, the mean time between the avalanches is reduced from 13.7 seconds when testing NitCal 99 alone to 8.03 seconds when testing NitCal 99 + 1 weight% Damolin DA 100G. As can be seen in figures 3 and 4, the "scribble" of the diagram of NitCal 99+1 weight% Damolin DA 100G is more together than the "scribble" of the diagram of NitCal 99 alone. The more together the "scribble" in the diagram, the better the flowability.

Out of the both above test methods, it can be concluded that the flowability of NitCal 99 alone is very poor, while adding an anti-caking agent according to the invention such as a diatomaceous earth product as Damolin DA 100G improves the flowability significantly.

## Claims

1. A solid particulate calcium nitrate composition having particles with an average particle size of between 0.1 mm and 1 mm and comprising an anti-caking agent, **CHARACTERIZED IN THAT** the anti-caking agent consists of a solid particulate silicate with an average particle size of between 0.05 µm and 750 µm, wherein the solid particulate silicate is present in an amount of 0.01 weight% to 2 weight%, based on the weight of the solid particulate calcium nitrate composition and wherein the solid particulate silicate is a solid particulate silicon dioxide.

2. Solid particulate calcium nitrate composition according to claim 1, wherein the solid particulate calcium nitrate composition comprises:
- a solid particulate anhydrous calcium nitrate and having particles with an average particle size of between 0.1 mm and 1 mm;
- a solid particulate potassium calcium nitrate and having particles with an average particle size of between 0.1 mm and 1 mm; or;
- a solid particulate ammonium calcium nitrate and having particles with an average particle size of between 0.1 mm and 1 mm.

3. Solid particulate calcium nitrate composition according to claim 1 or 2 , wherein the solid particulate silicate is present in an amount of 0.05 weight% to 2 weight%, and most preferably in an amount of 0.1 weight% to 1 weight% of the weight content of the solid particulate calcium nitrate composition.

4. Solid particulate calcium nitrate composition according to any one of claims 1 to 3, wherein the solid particulate silicate is an amorphous solid particulate silicon dioxide, preferably wherein the amorphous solid particulate silicon dioxide consists of a silica fume, a diatomaceous earth or mixtures thereof.

5. Solid particulate calcium nitrate composition according to any one of claims 1 to 4, wherein the composition has a caking number below 20.

6. A pre-blend binder composition comprising a hydraulic binder and 0.5 weight% to 5 weight% solid particulate calcium nitrate composition according to any of claims 1 to 5.

7. A dry mortar mixture or a tile adhesive composition, at least comprising
- a fine aggregate, preferably sand; and
- a pre-blend binder composition according to claim 5.

8. A dry concrete mixture, at least comprising
- a coarse aggregate consisting of stones and/or gravel, and a fine aggregate, preferably sand; and
- a pre-blend binder composition according to claim 5.

9. A method for producing a solid particulate calcium nitrate composition according to any of claims 1 to 5, comprising the steps of:
- providing a freshly produced and cooled anhydrous solid particulate calcium nitrate, solid particulate potassium calcium nitrate or solid particulate ammonium calcium nitrate, having particles with an average particle size of between 0.1 mm and 1 mm, wherein the amount of free water in the freshly produced and cooled anhydrous solid particulate calcium nitrate, solid particulate potassium calcium nitrate or solid particulate ammonium calcium nitrate is less than 1 weight%; and
- adding to the freshly produced and cooled anhydrous solid particulate calcium nitrate, solid particulate potassium calcium nitrate or solid particulate ammonium calcium nitrate, a solid particulate silicate having particles with an average particle size of between 0.05 µm and 750 µm in an amount of 0.01 weight% to 2.00 weight% of the weight content of the solid particulate calcium nitrate composition as anti-caking agent for the anhydrous solid particulate calcium nitrate, solid particulate potassium calcium nitrate or solid particulate ammonium calcium nitrate.

10. The method according to claim 9, wherein the solid particulate silicate is present in an amount of 0.05 to 2 weight%, and most preferably in an amount of 0.1 to 1 weight% of the weight content of the solid particulate calcium nitrate composition.

11. The method according to any one of claims 9 to 10, wherein, the solid particulate silicate is a solid particulate silicon dioxide, preferably wherein the solid particulate silicate is an amorphous solid particulate silicon dioxide, more preferably wherein the amorphous solid particulate silicon dioxide consists of a silica fume, a diatomaceous earth or mixtures thereof.

12. The method according to any one of claims 9 to 11, wherein the composition has a caking number below 20.

13. Use of a solid particulate silicate having particles with an average particle size of between 0.05 and 750 µm as anti-caking agent for a solid particulate calcium nitrate composition having particles with an average particle size of between 0.1 and 1 mm.

14. Use of a solid particulate calcium nitrate composition according to any of claims 1 to 5 as a setting accelerator for a cementitious binder.

15. Use according to claim 14, wherein the cementitious binder is used in a dry mortar mixture, a dry concrete mixture or a tile adhesive composition.

## Patentansprüche

1. Feste, teilchenförmige Calciumnitratzusammensetzung, die Teilchen mit einer durchschnittlichen Teilchengröße zwischen 0,1 mm und 1 mm aufweist und ein Antibackmittel, **dadurch gekennzeichnet, dass** das Antibackmittel aus einem festen, teilchenförmigen Silikat mit einer durchschnittlichen Teilchengröße zwischen 0,05 µm und 750 µm besteht, wobei das feste, teilchenförmige Silikat in einer Menge von 0,01 Gewichts-% bis 2 Gewichts-%, bezogen auf das Gewicht der festen, teilchenförmigen Calciumnitratzusammensetzung, vorliegt und wobei es sich bei dem festen, teilchenförmigen Silikat um ein festes, teilchenförmiges Siliciumdioxid handelt.

2. Feste, teilchenförmige Calciumnitratzusammensetzung nach Anspruch 1, wobei die feste, teilchenförmige Calciumnitratzusammensetzung:
- ein festes, teilchenförmiges, wasserfreies Calciumnitrat umfasst und Teilchen mit einer durchschnittlichen Teilchengröße zwischen 0,1 mm und 1 mm aufweist;
- ein festes, teilchenförmiges Kaliumcalciumnitrat umfasst und Teilchen mit einer durchschnittlichen Teilchengröße zwischen 0,1 mm und 1 mm aufweist; oder
- ein festes, teilchenförmiges Ammoniumcalciumnitrat umfasst und Teilchen mit einer durchschnittlichen Teilchengröße zwischen 0,1 mm und 1 mm aufweist.

3. Feste, teilchenförmige Calciumnitratzusammensetzung nach Anspruch 1 oder 2, wobei das feste, teilchenförmige Silikat in einer Menge von 0,05 Gewichts-% bis 2 Gewichts-% und ganz besonders bevorzugt in einer Menge von 0,1 Gewichts-% bis 1 Gewichts-% des Gewichtsgehalts der festen, teilchenförmigen Calciumnitratzusammensetzung vorliegt.

4. Feste, teilchenförmige Calciumnitratzusammensetzung nach einem der Ansprüche 1 bis 3, wobei es sich bei dem festen, teilchenförmigen Silikat um ein amorphes, festes, teilchenförmiges Siliciumdioxid handelt, wobei das amorphe, feste, teilchenförmige Siliciumdioxid vorzugsweise aus einem Silicastaub, einer Diatomeenerde oder Mischungen davon besteht.

5. Feste, teilchenförmige Calciumnitratzusammensetzung nach einem der Ansprüche 1 bis 4, wobei die Zusammensetzung eine Backzahl von weniger als 20 aufweist.

6. Vormischungsbindemittelzusammensetzung, die ein hydraulisches Bindemittel und 0,5 Gewichts-% bis 5 Gewichts-% feste, teilchenförmige Calciumnitratzusammensetzung nach einem der Ansprüche 1 bis 5 umfasst.

7. Trockenmörtelmischung oder Fliesenkleberzusammensetzung, die wenigstens Folgendes umfasst:
- einen Feinzuschlagstoff, vorzugsweise Sand; und
- eine Vormischungsbindemittelzusammensetzung nach Anspruch 5.

8. Trockenbetonmischung, die wenigstens Folgendes umfasst:
- einen aus Steinen und/oder Kies bestehenden Grobzuschlagstoff und einen Feinzuschlagstoff, vorzugsweise Sand; und
- eine Vormischungsbindemittelzusammensetzung nach Anspruch 5.

9. Verfahren zur Herstellung einer festen, teilchenförmigen Calciumnitratzusammensetzung nach einem der Ansprüche 1 bis 5, das die folgenden Schritte umfasst:
- Bereitstellen eines frisch hergestellten und gekühlten wasserfreien, festen, teilchenförmigen Calciumnitrats, eines frisch hergestellten und gekühlten festen, teilchenförmigen Kaliumcalciumnitrats oder eines frisch hergestellten und gekühlten festen, teilchenförmigen Ammoniumcalciumnitrats, das Teilchen mit einer durchschnittlichen Teilchengröße zwischen 0,1 mm und 1 mm aufweist, wobei die Menge an freiem Wasser in dem frisch hergestellten und gekühlten wasserfreien, festen, teilchenförmigen Calciumnitrat, dem frisch hergestellten und gekühlten festen, teilchenförmigen Kaliumcalciumnitrat oder dem frisch hergestellten und gekühlten festen, teilchenförmigen Ammoniumcalciumnitrat weniger als 1 Gewichts-% beträgt; und
- Zugeben eines festen, teilchenförmigen Silikats, das Teilchen mit einer durchschnittlichen Teilchengröße zwischen 0,05 µm und 750 µm aufweist, in einer Menge von 0,01 Gewichts-% bis 2,00 Gewichts-% des Gewichtsgehalts der festen, teilchenförmigen Calciumnitratzusammensetzung zu dem frisch hergestellten und gekühlten wasserfreien, festen, teilchenförmigen Calciumnitrat, dem frisch hergestellten und gekühlten festen, teilchenförmigen Kaliumcalciumnitrat oder dem frisch hergestellten und gekühlten festen, teilchenförmigen Ammoniumcalciumnitrat als Antibackmittel für das wasserfreie, feste, teilchenförmige Calciumnitrat, das feste, teilchenförmige Kaliumcalciumnitrat oder das feste, teilchenförmige Ammoniumcalciumnitrat.

10. Verfahren nach Anspruch 9, wobei das feste, teilchenförmige Silikat in einer Menge von 0,05 Gewichts-% bis 2 Gewichts-% und ganz besonders bevorzugt in einer Menge von 0,1 bis 1 Gewichts-% des Gewichtsgehalts der festen, teilchenförmigen Calciumnitratzusammensetzung vorliegt.

11. Verfahren nach einem der Ansprüche 9 bis 10, wobei es sich bei dem festen, teilchenförmigen Silikat um ein festes, teilchenförmiges Siliciumdioxid handelt, wobei es sich bei dem festen, teilchenförmigen Silikat vorzugsweise um ein amorphes, festes, teilchenförmiges Siliciumdioxid handelt, wobei das amorphe, feste, teilchenförmige Siliciumdioxid weiter bevorzugt aus einem Silicastaub, einer Diatomeenerde oder Mischungen davon besteht.

12. Verfahren nach einem der Ansprüche 9 bis 11, wobei die Zusammensetzung eine Backzahl von weniger als 20 aufweist.

13. Verwendung eines festen, teilchenförmigen Silikats, das Teilchen mit einer durchschnittlichen Teilchengröße zwischen 0,05 µm und 750 µm aufweist, als Antibackmittel für eine feste, teilchenförmige Calciumnitratzusammensetzung, die Teilchen mit einer durchschnittlichen Teilchengröße zwischen 0,1 mm und 1 mm aufweist.

14. Verwendung einer festen, teilchenförmigen Calciumnitratzusammensetzung nach einem der Ansprüche 1 bis 5 als Abbindebeschleuniger für ein zementöses Bindemittel.

15. Verwendung nach Anspruch 14, wobei das zementöse Bindemittel in einer Trockenmörtelmischung, einer Trockenbetonmischung oder einer Fliesenkleberzusammensetzung verwendet wird.

## Revendications

1. Composition de nitrate de calcium particulaire solide possédant des particules dotées d'une taille moyenne de particule comprise entre 0,1 mm et 1 mm et comprenant un agent anti-mottant, **CARACTÉRISÉE EN CE QUE** l'agent anti-mottant est constitué d'un silicate particulaire solide doté d'une taille moyenne de particule comprise entre 0,05 µm et 750 µm, le silicate particulaire solide étant présent en une quantité de 0,01 % en poids à 2 % en poids, sur la base du poids de la composition de nitrate de calcium particulaire solide et le silicate particulaire solide étant un dioxyde de silicium particulaire solide.

2. Composition de nitrate de calcium particulaire solide selon la revendication 1, la composition de nitrate de calcium particulaire solide comprenant :
- un nitrate de calcium anhydre particulaire solide possédant des particules dotées d'une taille moyenne de particule comprise entre 0,1 mm et 1 mm ;
- un nitrate de calcium potassium particulaire solide possédant des particules dotées d'une taille moyenne de particule comprise entre 0,1 mm et 1 mm ; ou ;
- un nitrate de calcium ammonium particulaire solide possédant des particules dotées d'une taille moyenne de particule comprise entre 0,1 mm et 1 mm.

3. Composition de nitrate de calcium particulaire solide selon la revendication 1 ou 2, le silicate particulaire solide étant présent en une quantité de 0,05 % en poids à 2 % en poids, et le plus préférablement en une quantité de 0,1 % en poids à 1 % en poids de la teneur en poids de la composition de nitrate de calcium particulaire solide.

4. Composition de nitrate de calcium particulaire solide selon l'une quelconque des revendications 1 à 3, le silicate particulaire solide étant un dioxyde de silicium particulaire solide amorphe, préférablement le dioxyde de silicium particulaire solide amorphe étant constitué d'une fumée de silice, d'une terre à diatomées ou de mélanges correspondants.

5. Composition de nitrate de calcium particulaire solide selon l'une quelconque des revendications 1 à 4, la composition possédant un indice de mottage inférieur à 20.

6. Composition de liant en pré-mélange comprenant un liant hydraulique et de 0,5 % en poids à 5 % en poids de composition de nitrate de calcium particulaire solide selon l'une quelconque des revendications 1 à 5.

7. Mélange de mortier sec ou composition d'adhésif pour carrelage, comprenant au moins
- un agrégat fin, préférablement du sable ; et
- une composition de liant en pré-mélange selon la revendication 5.

8. Mélange de béton sec, comprenant au moins
- un agrégat grossier constitué de pierres et/ou de graviers, et un agrégat fin, préférablement du sable ; et
- une composition de liant en pré-mélange selon la revendication 5.

9. Procédé pour la production d'une composition de nitrate de calcium particulaire solide selon l'une quelconque des revendications 1 à 5, comprenant les étapes de :
- mise à disposition d'un nitrate de calcium particulaire solide anhydre, d'un nitrate de calcium potassium particulaire solide ou d'un nitrate de calcium ammonium particulaire solide, fraîchement produit et refroidi, possédant des particules dotées d'une taille moyenne de particule comprise entre 0,1 mm et 1 mm, la quantité d'eau libre dans le nitrate de calcium particulaire solide anhydre, le nitrate de calcium potassium particulaire solide ou le nitrate de calcium ammonium particulaire solide, fraîchement produit et refroidi, étant inférieure à 1 % en poids ; et
- ajout au nitrate de calcium particulaire solide anhydre, au nitrate de calcium potassium particulaire solide ou au nitrate de calcium ammonium particulaire solide, fraîchement produit et refroidi, d'un silicate particulaire solide possédant des particules dotées d'une taille moyenne de particule comprise entre 0,05 µm et 750 µm en une quantité de 0,01 % en poids à 2,00 % en poids de la teneur en poids de la composition de nitrate de calcium particulaire solide, en tant qu'agent anti-mottant pour le nitrate de calcium particulaire solide anhydre, le nitrate de calcium potassium particulaire solide ou le nitrate de calcium ammonium particulaire solide.

10. Procédé selon la revendication 9, le silicate particulaire solide étant présent en une quantité de 0,05 à 2 % en poids, et le plus préférablement en une quantité de 0,1 à 1 % en poids de la teneur en poids de la composition de nitrate de calcium particulaire solide.

11. Procédé selon l'une quelconque des revendications 9 et 10, le silicate particulaire solide étant un dioxyde de silicium particulaire solide, préférablement le silicate particulaire solide étant un dioxyde de silicium particulaire solide amorphe, plus préférablement le dioxyde de silicium particulaire solide amorphe étant constitué d'une fumée de silice, d'une terre à diatomées ou de mélanges correspondants.

12. Procédé selon l'une quelconque des revendications 9 à 11, la composition possédant un indice de mottage inférieur à 20.

13. Utilisation d'un silicate particulaire solide possédant des particules dotées d'une taille moyenne de particule comprise entre 0,05 et 750 µm en tant qu'agent anti-mottant pour une composition de nitrate de calcium particulaire solide possédant des particules dotées d'une taille moyenne de particule comprise entre 0,1 et 1 mm.

14. Utilisation d'une composition de nitrate de calcium particulaire solide selon l'une quelconque des revendications 1 à 5 en tant qu'accélérateur de prise pour un liant à base de ciment.

15. Utilisation selon la revendication 14, le liant à base de ciment étant utilisé dans un mélange de mortier sec, un mélange de béton sec ou une composition d'adhésif pour carrelage.
